# NEUE EUROPÄISCHE PATENTSCHRIFT

(11) **EP 1 304 244 B2**
(45) Veröffentlichungstag und Bekanntmachung des Hinweises auf die Entscheidung über den Einspruch: **14.12.2011**
(45) Hinweis auf die Patenterteilung: 26.04.2006
(21) Anmeldenummer: 02019776.0
(22) Anmeldetag: 04.09.2002
(51) Int. Cl.: B60H 3/06

(54) **Filterdichtsystem für Heiz-/Klimageräte**
Filter sealing system for heating-/air conditioning installations
Système d'étanchéité de filtre pour installations de chauffage/climatisation

(30) Priorität: 18.10.2001 DE 10151439
(43) Veröffentlichungstag der Anmeldung: 23.04.2003
(73) Patentinhaber: Valeo Klimasysteme GmbH, 96476 Rodach (DE)
(72) Erfinder: Fiene, Andreas, 38179 Gross Schwülper (DE); Legros, Philippe, 38461 Danndorf (DE)
(74) Vertreter: Prinz & Partner

(56) Entgegenhaltungen:
- DE-A- 19 804 452
- DE-A1- 19 856 520
- DE-A1- 19 859 854
- DE-C- 4 234 047
- DE-U- 29 705 649
- FR-A- 2 727 903
- FR-A- 2 741 568
- FR-A- 2 815 699
- US-A- 3 747 772
- US-A- 5 569 311
- US-A1- 2002 029 549

## Beschreibung

Die vorliegende Erfindung betrifft eine Luftfilteranordnung, wie sie in einer Kraftfahrzeugsbelüftungs-, -heiz- und/oder -klimaanlage zum Einsatz kommt.

Solch eine Luftfilteranordnung umfasst üblicherweise einen Luftfilter mit einem Filterelement und einem zumindest teilweise umlaufenden Filterrahmen, sowie ein Luftfiltergehäuse zum Stützen des Luftfilters an einem gewünschten Ort der Belüftungs-, -heiz- und/oder -klimaanlage. Angesichts der hohen Lebenserwartung von Kraftfahrzeugen und der starken Umweltverschmutzung ist es erforderlich, den Luftfilter austauschbar vorzusehen. Zu diesem Zweck verfügt üblicherweise das Luftfiltergehäuse über eine Luftfilteröffnung, die mittels eines Deckels verschließbar ist, um einen Zugriff auf den Filter selbst gewährleisten zu können. Um die Dichtheit des Luftfiltergehäuses trotz des Vorhandenseins eines Deckels gewährleisten zu können, verfügt üblicherweise wahlweise das Gehäuse und/oder der Deckel über eine peripher umlaufende Dichtung, die z. B. an dem Deckel angespritzt oder in einer entsprechenden Aufnahme des Luftfiltergehäuses ausgebildet sein kann.

Es hat sich nunmehr jedoch gezeigt, dass es gerade in diesem Bereich häufig zu Undichtigkeiten kommt, bedingt entweder durch eine Alterung des Dichtungsmaterials oder bedingt durch eine Verschmutzung, die sich auf der Dichtung ablagern kann, wenn z. B. der stark verschmutze Luftfilter gewechselt wird.

Es ist demgemäß erheblich, dass eine Luftfilteranordnung der eingangs genannten Art, insbesondere für eine Kraftfahrzeugsbelüftungs-, -heiz- und/oder -klimaanlage, umfassend einen Luftfilter mit einem Filterelement und einem zumindest teilweise umlaufenden Filterrahmen, sowie ein Luftfiltergehäuse, wobei das Luftfiltergehäuse über eine mittels eines Deckels verschließbare Luftfilteröffnung verfügt, um den Luftfilter wechseln zu können, derart auszubilden dass ein hohes Maß an Dichtheit gewährleistet werden kann. Dies wird z.B. in der US 3 747 772 gezeigt.

Dies wird erreicht indem dem Luftfilter eine Dichteinrichtung zur Dichtung zwischen Luftfiltergehäuse und Deckel zugeordnet ist, indem sie dem Luftfiltergehäuse und dem Deckel zwischen gelagert ist. Durch die Zuordnung der Dichteinrichtung zu dem Luftfilter und nicht mehr zu dem Luftfiltergehäuse und/oder dem Deckel ist es in besonders einfacher und kosteneffektiver Weise möglich, die Dichtheit zwischen dem Luftfiltergehäuse und dem Deckel praktisch unbegrenzt gewährleisten zu können, wobei auch eine Verschmutzung der Dichtung praktisch nicht zu Undichtheiten führen kann, da die Dichtung mit dem verschmutzten Filter ausgetauscht wird.

Die FR-A-2741568 beschreibt eine Luftfilteranordnung mit den Merkmalen des Oberbegriffes des Anspruches 1. Bei der beschriebenen Luftfilteranordnung wird eine Filterkartusche beschrieben, der einstückig eine Dichtung und ein Deckelelement zugeordnet sind. Beim Einführen der Filterkartusche wird die Dichtung mittels des Deckels in die Luftfilteröffnung eingeführt, bis ein Teil der Dichtung hinter einen Rücksprung greift, während ein anderer Teil der Dichtung in Form von Dichtlippen im Mündungsbereich anliegt. Die bekannte Luftfilteranordnung hat einerseits den Nachteil, dass beim Austausch der Filterkartusche auch der Deckel zu ersetzten ist während andererseits die erzielte Dichtwirkung nicht zufriedenstellend ist. Ein weiterer wesentlicher Nachteil in der vorbekannten Anordnung ist darin zusehen, dass das Gehäuse der Kraftfahrzeugsbelüftungs-, -heiz- und/oder -klimaanlage im Bereich der Luftfilteröffnung geschwächt ist und die Verwendung eines Deckels mit geringerer Abmessung als die Luftfilteröffnung keine strukturelle Verstärkung in diesem Bereich zur Verfügung stellen kann.

Es ist demnach Aufgabe der vorliegenden Erfindung einer bekannte Luftfilteranordnung, wie aus der FR-A-2741568 bekannt derart weiterzubilden, dass eine Kosteneinsparung bereitgestellt werden kann und die Möglichkeit gegeben ist eine verbesserte Dichtheit bereitzustellen, wie auch eine Verbesserung der strukturellen Integrität im Bereich der Luflfilteröffnung bereitstellen zu können.

Erfindungsgemäß wird diese Aufgabe durch eine Luftfilteranordnung mit den Merkmalen des Anspruches 1 gelöst, wobei der Deckel als separates Teil bezüglich des Luftfilters vorliegt und die Luftfilteröffnung vollständig überdeckt, so dass beim Austausch des Filterelementes der Deckel selbst wiederverwendet werden kann und der Deckel von außen an das Gehäuse anliegend die dem Luftfilter zugeordnete Dichtung einklemmen kann, wodurch eine hohe Dichtheit gewährleistet werden kann und die strukturelle Integrität des Gehäuses der Kraftfahrzeugsbelüflungs-, -heiz- und/oder -klimaanlage verbessert wird.

Bei einer bevorzugten Ausführungsform bildet die Dichteinrichtung einen zumindest teilweise elastisch verformbaren Teil des Filterrahmens aus. Auf diese Weise kann die erfindungsgemäße Luftfilteranordnung besonders einfach und kostengünstig, z. B. mittels ZweiKomponenten-Technik hergestellt werden, indem das elastisch verformbare Material der Dichteinrichtung an den Filterrahmen angespritzt wird.

Vorteilhafterweise verfügt das Filterelement über einen Fortsatz, der zwischen dem Luftfiltergehäuse und dem Deckel angeordnet werden kann. Durch diese Ausgestaltung ist es beispielhaft möglich, das Filterelement selbst, z. B. in der Form einer in dem Rahmen gefalteten Filterbahn, über die gesamte Länge des Deckels zu fixieren, ohne dass eine diesbezügliche separate Verklebung erforderlich wäre, da der Fortsatz einfach mit der Dichteinrichtung zwischen dem Deckel und das Luftfl1hrungsgehäuse geklemmt werden oder einen Teil derselben ausbilden kann.

Erfindungsgemäß überdeckt die Dichteinrichtung die Luftfilteröffnung vollständig. Anders ausgedrückt, kann die Dichteinrichtung auch einen weichen Deckel ausbilden, der dann durch den eigentlichen Deckel gestützt und mit dem Luftfiltergehäuse verpresst werden kann.

Um möglichst wenig Material zu benötigen, ist es bevorzugt, dass die Dichteinrichtung, insbesondere der elastisch verformbare Teil und/oder der Fortsatz im wesentlichen bezüglich der Form und/oder der Abmessungen dem Deckel entspricht. Ein weiterer Vorteil besteht darin, dass die Dichteinrichtung von dem darüber angeordneten Deckel vollständig geschützt wird.

Um einen Eingriff zwischen Deckel und Luftfiltergehäuse gewährleisten zu können, ist es bevorzugt, dass die Dichteinrichtung und/oder der Fortsatz zumindest eine Aussparung aufweist, wobei die Aussparung insbesondere zumindest ein Langloch umfasst, so dass eine Relativbewegung zwischen Deckel und Luftfiltergehäuse ohne Beschädigung der Dichteinrichtung und/oder des Fortsatzes dargestellt werden kann.

Zum Eingriff zwischen Deckel und Luftfiltergehäuse sind vorteilhafterweise Rastmittel vorgesehen. Bei den Rastmitteln kann es sich beispielhaft um solche handeln, die beim Anordnen des Deckels selbst zu einer Verrastung führen oder vorteilhafterweise um solche, die erst nach einer Relativbewegung im verpressten oder eingepressten Zustand zu einer Verrastung führen. Gerade im zuletzt genannten Fall ist es wünschenswert, die Rastmittel durch Aussparungen oder Langlöcher in dem Dichtelement und/oder dem Fortsatz zu führen, so dass neben der Verrastungsfunktion zwischen Luftfiltergehäuse und Deckel auch eine Führung und zusätzliche Fixierung des Dichtelementes und des Fortsatzes erhalten wird.

Zusätzlich oder alternativ ist es möglich eine Sicherungseinrichtung vorzusehen, um z. B. ein unbeabsichtigtes Außereingrifftreten zwischen Deckel und Luftfiltergehäuse zu verhindern. Ein besonders einfaches Sicherungsmittel wird gebildet aus zwei Öffnungen, die miteinander in Flucht gebracht werden können, und in die ein Sicherheitselement, wie z. B. eine Schraube eingeführt werden kann.

Schließlich ist es bevorzugt, dass der Deckel Versteifungselemente umfasst. Durch das Vorsehen von Versteifungselementen ist es insbesondere möglich, den Deckel mit entsprechenden strukturellen Eigenschaften zu versehen, wie sie in dem Luftfiltergehäuse vorliegen. Die Versteifungselemente können z. B. in der Form von Versteifungsrippen oder ähnlichem ausgebildet sein.

Weitere Vorteile und Merkmale der vorliegenden Erfindung ergeben sich ferner aus der lediglich beispielhaft angegebenen Beschreibung einer derzeit bevorzugten Ausführungsform, bei welcher auf die beiliegenden Zeichnungen Bezug genommen wird, in welchen gilt:
Fig. 1 zeigt in perspektivischer Darstellung eine Luftfilteranordnung gemäß der bevorzugten Ausführungsform während der Montage des Luftfilters.
Fig. 2 zeigt eine Schnittansicht durch die in Fig. 1 gezeigte Filteranordnung nach der Montage.
Fig. 3 zeigt in einer Schnittansicht orthogonal zu der Darstellung von Fig. 2, die in Fig. 1 gezeigte Luftfilteranordnung im montierten Zustand.

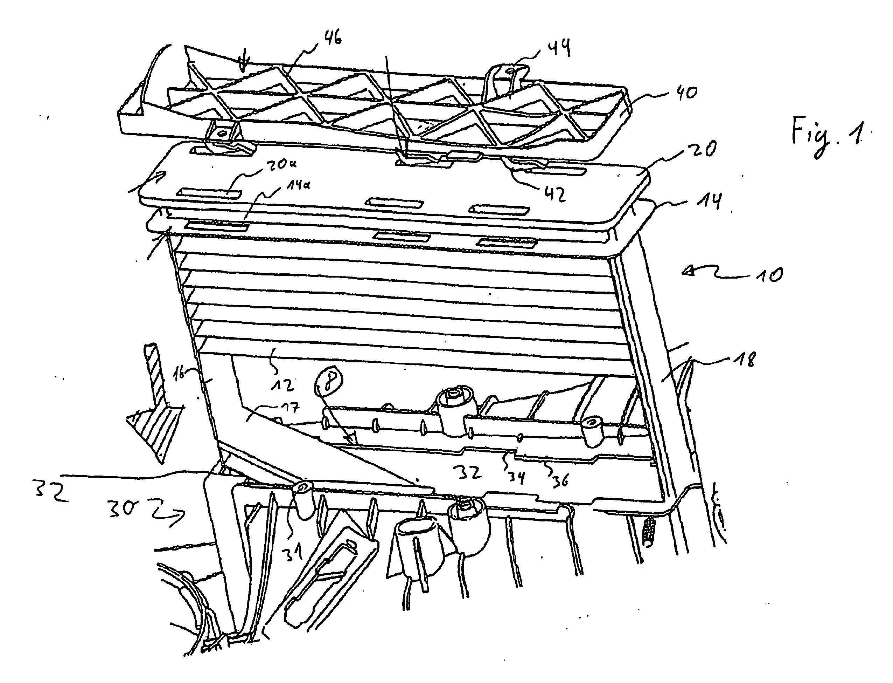

Am unteren Ende von Fig. 1 ist ein Luftfiltergehäuse 30 dargestellt, welches z. B. Teil eines Luftführungsgehäuses einer Kraftfahrzeugsbelüftungs-, -heiz- und/oder -klimaanlage sein kann. Das Luftführungsgehäuse 30 ist mit einer Luftfilteröffnung 32 versehen, die durch einen peripheren Rand 34, 36 begrenzt wird. Die Luftfilteröffnung dient dazu, einen Luftfilter einzuführen, wie dies durch den Pfeil angedeutet ist.

Der Luftfilter selbst ist beim Bezugszeichen 10 angedeutet und umfasst jeweils gegenüberliegende Filterrahmenabschnitte 16 und 18, die an einem Ende des Luftfilters über einen weiteren Filterrahmenabschnitt 17 verbunden sind. In dem durch die drei Abschnitte 16, 17 und 18 definierten Raum ist ein Filterelement 12 angeordnet, welches in der gezeigten Ausführungsform ein gefaltet vorgesehenes Filterpapier 12 ist. Das Filterelement 12 verfügt in der gezeigten Ausführungsform über einen Fortsatz 14, der sich über die seitlichen Filterrahmenabschnitte 16 und 18 hinaus erstreckt, wie auch über die Ebene, die durch die jeweiligen Faltscheitel definiert sind. Oberhalb des Fortsatzes 14 wird der Luftfilterrahmen durch ein elastisch verformbares Dichtelement 20 komplettiert, welches in der gezeigten Ausführungsform ein flächiges Gebilde aus einem relativ weichen Material ist. Der Fortsatz kann selbst auch das Dichtelement ausbilden oder mit diesem als integrales Teil vorgesehen sein. Sowohl der Fortsatz 14 als auch die Dichteinrichtung 20 sind mit Aussparungen 14a und 20a in der Form von Langlöchern versehen, deren Funktion später im Detail beschrieben wird. Die Langlöcher 14a und 20a sind vorgesehen an Abschnitten, die rückspringenden Bereichen 34 des peripheren Randes der Luftfilteröffnung 32 entsprechen.

Vervollständigt wird die dargestellte Luftfilteranordnung durch einen Deckel 40, der im montierten Zustand eine strukturelle Einheit mit dem Luftfiltergehäuse 30 ausbildet und dazu dient, den Fortsatz 14, sowie die Dichteinrichtung 20 mit dem Luftfiltergehäuse 30 zu verklemmen, so dass eine Fixierung des Filterelements und eine Abdichtung gewährleistet werden.

Der Deckel 40 verfügt in der gezeigten Ausführungsform über Rasthaken 42, die durch die Aussparungen 14a und 20a in der Dichteinrichtung 20 und dem Fortsatz 14 treten können, um im Wege einer Translationsbewegung des Deckels 40 den peripheren Rand 34, 36 der Luftfilteröffnung rastartig hintergreifen zu können. Ferner umfasst der Deckel 40 Versteifungsrippen 46, sowie Laschen 44, die als Sicherungeinrichtung über eine Öffnung verfügen, die jeweils mit Öffnungen 31 des Luftfiltergehäuses in Flucht gebracht werden können, so dass eine Fixierung mittels, z. B. von Schrauben, möglich ist.

Wie es insgesamt deutlich zu erkennen ist, entsprechen die Dichteinrichtung 20 sowie der Fortsatz 14 im wesentlichen in Form und Größe dem Deckel 40, so dass sie im montierten Zustand vollständig von dem Deckel bedeckt und somit durch diesen geschützt werden. Gleichzeitig sind der Fortsatz 14 und das elastisch verformbare Teil 20 dergestalt, dass sie die Luftfilteröffnung 32 vollständig überdecken, so dass sie flach an einer Fläche anliegen können, die jenseits des peripheren Randes 34, 36 am Luftfiltergehäuse besteht.

Obwohl in der Darstellung von der Fig. 1 zu Darstellungszwecken der Fortsatz 14 und das Dichtelement 20 als beabstandet dargestellt sind, ist es ebenso möglich diese aneinander anliegend vorzusehen. In Erweiterung ist es ebenfalls möglich, den Fortsatz 14 gleitfähig an den Seitenabschnitten 16, 18 des Filterrahmens zu lagern, so dass bei der Montage der Fortsatz 14 an das Dichtelement 20 herangeführt werden kann. Bei einer noch weiteren Alternative ist ein Stegabschnitt zwischen dem Fortsatz 14 und dem Dichtelement 20 ausgebildet, der ebenfalls verformbar ist, wie die Dichteinrichtung 20 selbst.

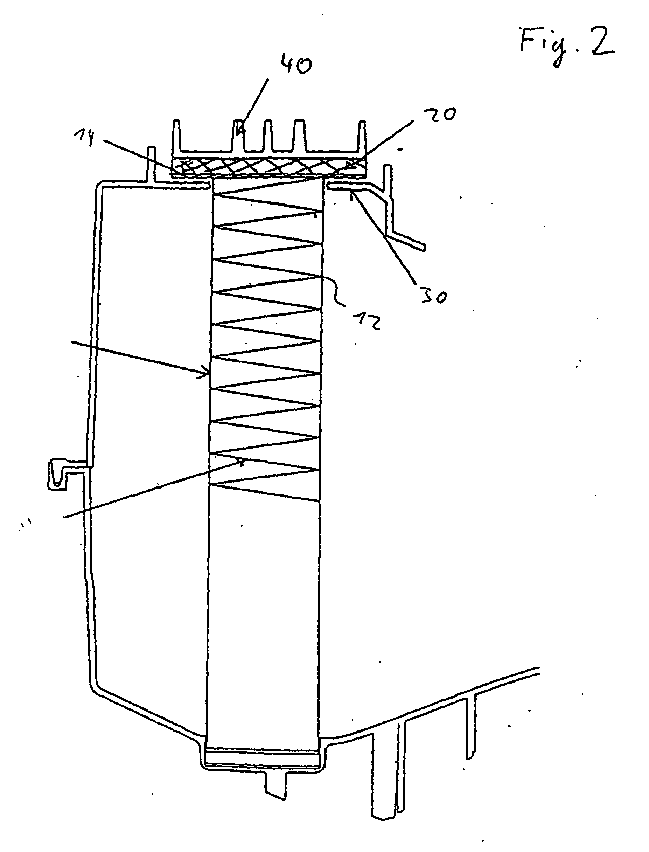

Bei der Montage der dargestellten Lüftfilteranördnung wird somit der Luftfilter entsprechend dem in Fig. 1 gezeigten Pfeil in die Luftfilteröffnung eingeführt, bis der Fortsatz 14 bezüglich des Luftfiltergehäuses in Anlage gelangt. Anschließend wird ein leichter Druck auf die Dichteinrichtung 20 ausgeübt, z. B. mittels des Deckels oder auch eines anderen geeigneten Werkzeuges, um insoweit vorhanden die Beabstandung zwischen dem Fortsatz 14 und der Dichteinrichtung 20 zu eliminieren. Sollte die Druckbeaufschlagung mittels des Deckels 40 selbst erfolgt sein, so wird durch die Rastnasen 42 gewährleistet, dass beim Niederdrücken die Ausrichtung der Dichteinrichtung 20 und des Fortsatzes 14 aufrechterhalten wird, da die Rastnasen 42 in die entsprechenden Langlöcher 20a und 14a eingreifen. Somit wird die in Fig. 2 gezeigte Konfiguration erreicht, bei der an dem Luftfiltergehäuse der Fortsatz 14 anliegt, an welchem die Dichteinrichtung 20 anliegt, wobei an dem Dichtelement der Deckel 40 eben aufliegt.

Wie es in Fig. 2 deutlich zu erkennen ist, wird somit eine sandwichartige Konstruktion im Randbereich herum um die Luftfilteröffnung bereitgestellt, die eine effektive Abdichtung bewirkt, und zwar jedesmal mit einem unverschmutzten Dichtelement, welches über die gewünschten Verformungseigenschaften verfügt, da ein Alterungsprozess noch nicht eingesetzt hat.

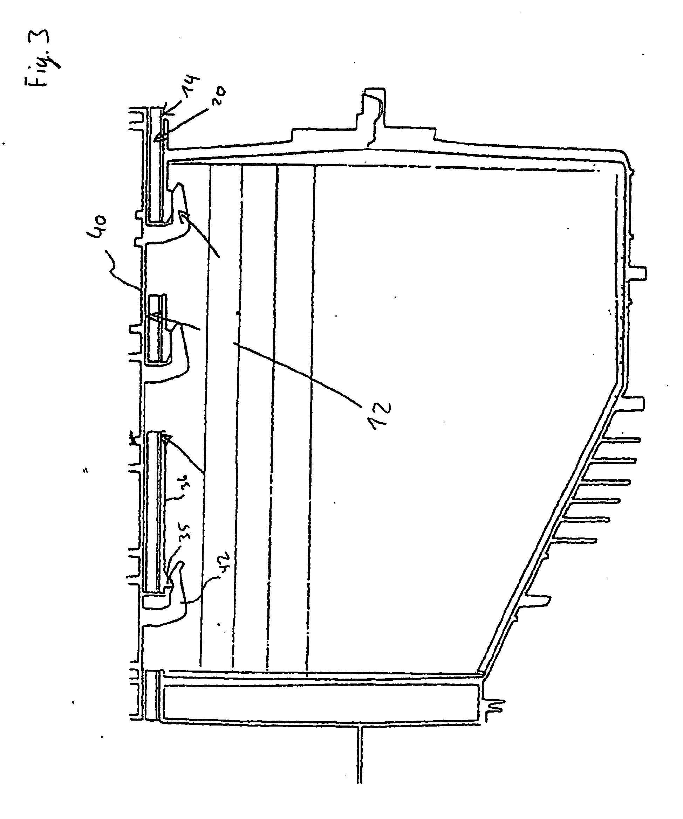

Sobald die Konfiguration von Fig. 2 erreicht ist, genügt eine Translationsbewegung des Dekkels 40 in der Ebene des Filterelementes um die Konfiguration zu erreichen, wie sie in Fig. 3 gezeigt ist. Wie dort deutlich zu erkennen ist, greifen die Rastnasen 42 hinter die vorspringenden Abschnitte 36 des peripheren Randes der Luftfilteröffnung, die in der gezei.gten Ausfiihrungsform zusätzlich über Rastvorsprünge 35 verfügen. Wie deutlich zu erkennen, wird durch die Rastnasen 42 die Dichteinrichtung 20 und der Fortsatz 14 zwischen dem Deckel 4 und dem Luftfiltergehäuse 30 verpresst, so dass eine umlaufende Dichtheit gewährleistet wird. Aus der Ansicht von Fig. 3 erkennt der Fachmann unmittelbar warum die Aussparungen 20a und 14a in der Form von Langlöchern ausgebildet sind, nämlich um die entsprechende Translationsbewegung gewährleisten zu können. In der in Fig. 3 gezeigten Konfiguration ist es abschließend möglich, eine Schraube durch die Lasche 44 zu führen, um diese mit der Öffnung 31 in Eingriff zu bringen, die bezüglich der Lasche 44 nach der Translationsbewegung fluchtet, um ein ungewünschtes Lösen des Deckels zu verhindern.

Jedesmal wenn nun der Luftfilter zu wechseln ist, genügt es die oben angegebenen Schritte in umgekehrter Reihenfolge rückgängig zu machen. Nach erfolgtem Ausbau des Luftfilters wird ein neuer Luftfilter mit einer neuen unverschmutzten ihr zugeordneten, z. B. einstückig ausgebildeten Dichteinrichtung eingesetzt, und nach erfolgter Remontage liegt eine Abdichtung vor, die sich von einer Erstmontage praktisch nicht unterscheidet.

Obwohl vorangehend darauf eingegangen wurde, daß im Bereich der Luftfilteröffnung ein sandwichartiger Aufbau vorgesehen ist, sollte verstanden werden, daß der Filterrahmen abschnittsweise oder auch insgesamt aufgebaut sein kann aus zwei Schichten mit unterschiedlichen Materialeigenschaften. Insbesondere ist es möglich, das Filtermedium in einem formgebenden Textilrahmen zu stützen, der sandwichartig von einem Textilvlies oder Schaum umgeben wird um gehäuseinnenseitig eine umlaufende Abdichtung bereitstellen zu können. Durch den Einsatz eines Textilvlieses oder eines Schaumes kann sowohl eine Abdichtung in der Strömungsrichtung als auch in der Streckungsrichtung des Filtermediums bereitgestellt werden, indem man z.B. ein geeignetes Übermaß vorsieht. Selbstverständlich kann auch der elastisch verformbare Teil, wie er in dem Detail beschriebene Ausführungsformen genannt wird, aus einem Fliesmaterial oder einem Schaumstoff gebildet sein.

Obwohl die vorliegende Erfindung vorangehend vollständig und beispielhaft unter Bezugnahme auf eine derzeit bevorzugte Ausführungsform beschrieben wurde, sollte der Fachmann erkennnen, dass verschiedenste Veränderungen und Modifikationen im Rahmen der Ansprüche möglich sind. So ist zu verstehen, dass beispielsweise auf die Rastmittel verzichtet werden könnte, um eine noch homogenere und größere Auflagefläche bereitzustellen, auf der die Dichteinrichtung 20 und/oder der Fortsatz 14 zwischen dem Luftfiltergehäuse und dem Dekkel einklemmbar,ist. Wesentlich ist letztendlich, dass entgegen den bisherigen Ansätzen eine Luftfilteranordnung angegeben wird, die bei jedem Luftfilterwechsel automatisch einen Dichtungswechsel mit sich bringt, da die Dichtung dem Filterelement selbst zugeordnet ist.

## Patentansprüche

1. Luftfilteranordnung für eine Kraftfahrzeugbelüftungs-, -heiz- und/oder -klimaanlage, umfassend einen Luftfilter (10) mit einem Filterelement (12, 14) und einem zumindest teilweise umlaufenden Filterrahmen (14, 16, 17, 18, 20), sowie ein Luftfiltergehäuse (30), wobei das Luftfiltergehäuse (30) über eine mittels eines geschlossenen Deckels (40) verschließbare Luftfilteröffnung (32) verfügt, um den Luftfilter (10) wechseln zu können, wobei dem Luftfilter (10) eine Dichteinrichtung (20) zur Dichtung zwischen Luftfiltergehäuse (30) und Deckel (40) zugeordnet ist, indem die Dichteinrichtung dem Luftfiltergehäuse und dem Deckel zwischengelagert ist, wobei der Deckel (40) separat vom Luftfilter vorliegt und die Luftfilteröffnung vollständig überdeckt, wobei der Luftfilter (10) mit der Dichteinrichtung (20) eine gemeinsame austauschbare Einheit bildet und wobei die Dichteinrichtung (20) die Luftfilteröffnung (32) vollständig überdeckt.

2. Luftfilteranordnung nach Anspruch 1, bei welcher die Dichteinrichtung einen zumindest teilweise elastisch verformbaren Teil des Filterrahmens (14, 16, 17, 18, 20) ausbildet.

3. Luftfilteranordnung nach einem der vorangegangenen Ansprüche, **dadurch gekennzeichnet, dass** das Filterelement (12) über einen Fortsatz (14) verfügt, der zwischen Luftfiltergehäuse (30) und Deckel (40) anordenbar ist, wobei der Fortsatz die Dichteinrichtung ausbilden oder als diesbezüglich integraler Teil vorgesehen sein kann.

4. Luftfilteranordnung nach einem der vorangegangenen Ansprüche, **dadurch gekennzeichnet, dass** die Dichteinrichtung (20), insbesondere der elastisch verformbare Teil (20) und/oder der Fortsatz (14), im wesentlich bezüglich der Form und/oder den Abmessungen des Deckels entspricht.

5. Luftfilteranordnung nach einem der vorangegangenen Ansprüche, **dadurch gekennzeichnet, dass** die Dichteinrichtung (20), insbesondere der elastisch verformbare Teil und/oder der Fortsatz (14), zumindest eine Aussparung (14a, 20a) aufweist, die einen Eingriff zwischen Deckel (40) und Luftfiltergehäuse (30) ermöglicht oder ermöglichen.

6. Luftfilteranordnung nach Anspruch 5, **dadurch gekennzeichnet, dass** die Aussparung(en) (14a, 20a) zumindest ein Langloch umfasst/umfassen.

7. Luftfilteranordnung nach einem der vorangegangenen Ansprüche, **dadurch gekennzeichnet, dass** zum Eingriff Deckel/Luftfiltergehäuse Rastmittel (42, 35) vorgesehen sind.

8. Luftfilteranordnung nach einem der vorangegangenen Ansprüche, **dadurch gekennzeichnet, dass** eine Sicherungseinrichtung (44, 31) vorgesehen ist.

9. Luftfilteranordnung nach einem der vorangegangenen Ansprüche, **dadurch gekennzeichnet, dass** der Deckel (40) Versteifungselement (46) umfasst.

10. Luftfilter einer Luftfilteranordnung nach einem der Ansprüche 1-9, ein Filterelement (12, 14) und einem zumindest teilweise umlaufenden Filterrahmen (14, 16, 17, 18, 20) umfassend, sowie eine zugeordnete Dichteinrichtung (20) zur Dichtung zwischen Luftfiltergehäuse (30) und Deckel (40), wobei die Dichteinrichtung (20) zumindest eine Aussparung (14a, 20a) aufweist, die einen Eingriff zwischen Deckel (40) und Luftfiltergehäuse (30) ermöglicht oder ermöglichen, und wobei die Dichteinrichtung (20), die Luftfilteröffnung (32) vollständig überdeckt.

11. Luftfilter nach Anspruch 10, bei welcher die Dichteinrichtung einen zumindest teilweise elastisch verformbaren Teil des Filterrahmens (14, 16, 17, 18, 20) ausbildet.

12. Luftfilter nach einem der Ansprüche 10 und 11, **dadurch gekennzeichnet, dass** die Dichteinrichtung (20), insbesondere der elastisch verformbare Teil (20), im wesentlich bezüglich der Form und/oder den Abmessungen des Deckels entspricht.

13. Luftfilter nach einem der Ansprüche 10-12, **dadurch gekennzeichnet, dass** das Filterelement mit einem Fortsatz versehen ist, der zwischen dem Luftfiltergehäuse und dem Deckel anordenbar ist.

14. Luftfilter nach einem der Ansprüche 10-13, **dadurch gekennzeichnet, dass** der Fortsatz (14) zumindest eine Aussparung (14a, 20a) aufweist, die einen Eingriff zwischen Deckel (40) und Luftfiltergehäuse (30) ermöglicht oder ermöglichen.

15. Luftfilter nach einem der Ansprüche 10-14, **dadurch gekennzeichnet, dass** der Fortsatz die Dichteinrichtung teilweise oder insgesamt ausbildet, zumindest diesbezüglich einstückig ausgeführt ist.

16. Luftfilter nach einem der Ansprüche 10-15, **dadurch gekennzeichnet, dass** die Aussparung(en) (14a, 20a) zumindest ein Langloch umfasst/umfassen.

## Claims

1. Air filter arrangement for a car ventilation, heating and/or climate control system, including an air filter (10) with a filter element (12, 14) and a filter frame (14, 16, 17, 18 and 20) surrounding it at least partially, as well as an air filter casing (30), wherein the air filter casing (30) has an air filter opening (32) that can be closed by means of a closed cover (40) allowing the air filter (10) to be changed, wherein the air filter (10) has a dedicated seal device (20) forming a seal between the air filter casing (30) and cover (40), the seal device being positioned between the air filter casing and the cover, wherein the cover (40) is provided separately from the air filter and totally covers the air filter opening, wherein the air filter (10) forms an integrally replaceable unit with the seal device (20), and wherein the seal device (20) totally covers the air filter opening (32).

2. Air filter arrangement according to claim 1, wherein the seal device forms part of the filter frame (14, 16, 17, 18 and 20) and is at least partially elastically deformable.

3. Air filter arrangement according to one of the above claims, **characterised by** the fact that the filter element (12) has an extension (14) that can be fitted between the air filter casing (30) and the cover (40), wherein the extension can form the seal device or can be provided as an integral part to do this.

4. Air filter arrangement according to one of the above claims, **characterised by** the fact that the seal device (20), in particular the elastically deformable part (20) and/or the extension (14), correspond essentially to the shape and/or dimensions of the cover.

5. Air filter arrangement according to the above claims, **characterised by** the fact that the seal device (20), in particular the elastically deformable part and/or extension (14), has at least one recess (14a and 20a) that allows the cover (40) and air filter casing (30) to fit together.

6. Air filter arrangement according to claim 5, **characterised by** the fact that the recess or recesses (14a, 20a) include at least one slot.

7. Air filter arrangement according to one of the above claims, **characterised by** the fact that retainer notches (42, 35) are provided for fitting the cover and air filter casing together.

8. Air filter arrangement according to one of the above claims, **characterised by** the fact that a safety device (44, 31) is provided.

9. Air filter arrangement according to one of the above claims, **characterised by** the fact that the cover (40) includes a stiffener (46).

10. Air filter for an air filter arrangement according to one of claims 1 to 9, including a filter element (12, 14) and filter frame (14, 16, 17, 18 and 20) surrounding it at least partially, as well as a dedicated seal device (20) forming a seal between the air filter casing (30) and cover (40), wherein the seal device (20) has at least one recess (14a, 20a) that allows the cover (40) and air filter casing (30) to fit together, and wherein the seal device (20) totally covers the air filter opening (32).

11. Air filter according to claim 10, wherein the seal device forms part of the filter frame (14, 16, 17, 18 and 20) and is at least partially elastically deformable.

12. Air filter according to one of claims 10 and 11, **characterised by** the fact that the seal device (20), in particular the resilient part (20), corresponds essentially to the shape and/or dimensions of the cover.

13. Air filter according to one of claims 10 to 12, **characterised by** the fact that the filter element is provided with an extension that can be positioned between the air filter casing and the cover.

14. Air filter according to one of claims 10 to 13, **characterised by** the fact that the extension (14) has at least one recess (14a, 20a) that allows the cover (40) and air filter casing (30) to fit together.

15. Air filter according to one of claims 10 to 14, **characterised by** the fact that the extension partially or totally forms the seal device or is designed at least as a single piece in this respect.

16. Air filter according to one of claims 10 to 15, **characterised by** the fact that the recess or recesses (14a, 20a) include at least one slot.

## Revendications

1. Agencement de filtre à air pour un système de ventilation, de chauffage et/ou de climatisation d'un véhicule automobile, comportant un filtre à air (10) avec un élément filtrant (12, 14) et un cadre de filtre (14, 16, 17, 18, 20) au moins en partie périphérique, ainsi qu'un boitier de filtre à air (30), le boîtier de filtre à air (30) disposant d'un orifice de filtre à air (32) pouvant être fermé au moyen d'un couvercle (40) fermé, afin de pouvoir remplacer le filtre à air (10), un dispositif d'étanchéité (20) pour un étanchement entre le boîtier de filtre à air (30) et le couvercle (40) étant associé au filtre à air (10), ledit dispositif d'étanchéité étant intercalé entre le boîtier de filtre à air et le couvercle, le couvercle (40) étant séparé du filtre à air et recouvrant entièrement l'orifice du filtre à air, le filtre à air (10) formant avec le dispositif d'étanchéité (20) une unité commune remplaçable, et le dispositif d'étanchéité (20) recouvrant entièrement l'orifice de filtre à air (32).

2. Agencement de filtre à air selon la revendication 1, dans lequel le dispositif d'étanchéité forme une partie au moins partiellement élastiquement déformable du cadre de filtre (14, 16, 17, 18, 20).

3. Agencement de filtre à air selon l'une quelconque des revendications précédentes, **caractérisé en ce que** l'élément filtrant (12) dispose d'un prolongement (14) qui peut être disposé entre le boîtier de filtre à air (30) et le couvercle (40), le prolongement pouvant former le dispositif d'étanchéité ou être prévu comme pièce faisant partie intégrale de celui-ci.

4. Agencement de filtre à air selon l'une quelconque des revendications précédentes, **caractérisé en ce que** le dispositif d'étanchéité (20), notamment la partie élastiquement déformable (20) et/ou le prolongement (14), correspond essentiellement à la forme et/ou aux dimensions du couvercle.

5. Agencement de filtre à air selon l'une quelconque des revendications précédentes, **caractérisé en ce que** le dispositif d'étanchéité (20), notamment la partie élastiquement déformable et/ou le prolongement (14), comprend au moins un évidement (14a, 20a) qui permet une mise en prise entre le couvercle (40) et le boîtier de filtre à air (30).

6. Agencement de filtre à air selon la revendication 5, **caractérisé en ce que** le(s) évidement(s) (14a, 20a) comporte(nt) au moins un trou oblong.

7. Agencement de filtre à air selon l'une quelconque des revendications précédentes, **caractérisé en ce que** des moyens d'engrènement (42, 35) sont prévus pour la mise en prise couvercle/boîtier de filtre à air.

8. Agencement de filtre à air selon l'une quelconque des revendications précédentes, **caractérisé en ce qu'**il est prévu un dispositif de sécurité (44, 31).

9. Agencement de filtre à air selon l'une quelconque des revendications précédentes, **caractérisé en ce que** le couvercle (40) comporte un élément de renforcement (46).

10. Filtre à air d'un agencement de filtre à air selon l'une quelconque des revendications 1 à 9, comportant un élément filtrant (12, 14) et un cadre de filtre (14, 16, 17, 18, 20) au moins en partie périphérique, ainsi qu'un dispositif d'étanchéité (20) associé pour un étanchement entre le boîtier de filtre à air (30) et le couvercle (40), le dispositif d'étanchéité (20) comprenant au moins un évidement (14a, 20a) qui permet une mise en prise entre le couvercle (40) et le boîtier de filtre à air (30), et le dispositif d'étanchéité (20) recouvrant entièrement l'orifice de filtre à air (32).

11. Filtre à air selon la revendication 10, dans lequel le dispositif d'étanchéité forme une partie au moins en partie élastiquement déformable du cadre de filtre (14, 16, 17, 18, 20).

12. Filtre à air selon l'une quelconque des revendications 10 et 11, **caractérisé en ce que** le dispositif d'étanchéité (20), notamment la partie élastiquement déformable (20) correspond essentiellement à la forme et/ou aux dimensions du couvercle.

13. Filtre à air selon l'une quelconque des revendications 10 à 12, **caractérisé en ce que** l'élément filtrant est pourvu d'un prolongement qui peut être disposé entre le boîtier de filtre à air et le couvercle.

14. Filtre à air selon l'une quelconque des revendications 10 à 13, **caractérisé en ce que** le prolongement (14) comprend au moins un évidement (14a, 20a) qui permet une mise en prise entre le couvercle (40) et le boîtier de filtre à air (30).

15. Filtre à air selon l'une quelconque des revendications 10 à 14, **caractérisé en ce que** le prolongement forme en partie ou entièrement le dispositif d'étanchéité, est au moins conçu en une seule pièce par rapport à celui-ci.

16. Filtre à air selon l'une quelconque des revendications 10 à 15, **caractérisé en ce que** le(s) évidement(s) (14a, 20a) comporte(nt) au moins un trou oblong.
